# EUROPÄISCHE PATENTSCHRIFT

(11) **EP 3 749 559 B1**
(45) Veröffentlichungstag und Bekanntmachung des Hinweises auf die Patenterteilung: **07.06.2023**
(21) Anmeldenummer: 19705098.2
(22) Anmeldetag: 28.01.2019
(51) Int. Cl.: B60T 17/18, B60T 17/20, B60T 17/22

(54) **NOTBREMSÜBERBRÜCKUNGSSYSTEM FÜR EIN BREMSSYSTEM FÜR EIN SCHIENENFAHRZEUG, BREMSSYSTEM MIT EINEM SOLCHEN NOTBREMSÜBERBRÜCKUNGSSYSTEM UND VERFAHREN ZUR NOTBREMSÜBERBRÜCKUNG**
EMERGENCY BRAKE OVERRIDE SYSTEM FOR THE BRAKE SYSTEM OF A RAIL VEHICLE, BRAKE SYSTEM WITH SUCH AN EMERGENCY BRAKE OVERRIDE SYSTEM AND METHOD TO OVERRIDE AN EMERGENCY BRAKE
SYSTÈME DE DÉSACTIVATION D'UN FREIN D'URGENCE POUR LE SYSTÈME DE FREINAGE D'UN VÉHICULE FERROVIAIRE, SYSTÈME DE FREINAGE AVEC UN TEL SYSTÈME DE DÉSACTIVATION ET PROCÉDÉ DE DÉSACTIVATION D'UN FREIN D'URGENCE.

(30) Priorität: 05.02.2018 DE 102018201752
(43) Veröffentlichungstag der Anmeldung: 16.12.2020
(73) Patentinhaber: KNORR-BREMSE Systeme für Schienenfahrzeuge GmbH, 80809 München (DE)
(72) Erfinder: LOUCA, Sebastian, 80799 München (DE)
(86) Internationale Anmeldenummer: PCT/EP2019/051957
(87) Internationale Veröffentlichungsnummer: WO 2019/149646

(56) Entgegenhaltungen:
- EP-A1- 1 674 358
- DE-U1- 20 203 677

## Beschreibung

Die Erfindung betrifft ein Notbremsüberbrückungssystem für ein Bremssystem für ein Schienenfahrzeug, ein Bremssystem mit einem solchen Notbremsüberbrückungssystem und ein Verfahren zur Notbremsüberbrückung, insbesondere ein Notbremsüberbrückungssystem und ein Verfahren zur Notbremsüberbrückung für ein Bremssystem für ein Schienenfahrzeug mit einer elektropneumatischen Bremssteuerung.

In Reisezügen kann ein Fahrgast durch Betätigen einer Notbremsbetätigungseinrichtung eine Situation, in der er Meinung ist, dass eine Notbremsung erforderlich ist, signalisieren. Eine unmittelbar eingeleitete Notbremsung kann aber dazu führen, dass der Reisezug in einem ungünstigen Streckenabschnitt, der beispielsweise für Hilfsmannschaften nur schwer zugänglich sind, zum Stehen kommt. Dies ist beispielsweise ein Tunnel, ein Berghang oder eine lange Brücke. Es ist also günstig, eine Notbremsung nicht unmittelbar auf ein Signalisieren einzuleiten, sondern die Notbremsung zu einem geeigneten Zeitpunkt in einem geeigneten Streckenabschnitt einzuleiten.

Aus diesem Grund sind Reisezüge mit einem System für eine Notbremsüberbrückung ausgerüstet, das es ermöglicht, die Notbremsung nicht unmittelbar auf das Signalisieren der Notbremsung durchzuführen, sondern zu einem geeigneten Zeitpunkt einzuleiten. Die Notbremsüberbrückung muss von einem Triebfahrzeugführer in den ungünstigen Streckenabschnitten, sogenannten Notbremsüberbrückungsabschnitten, angewandt werden. Solche Streckenabschnitte sind in einigen Ländern mit Schildern, sogenannten Hektometertafeln, mit orangefarbenen waagrechten Streifen gekennzeichnet. Befindet sich der Reisezug in einem derart gekennzeichneten Streckenabschnitt, muss der Triebfahrzeugführer die Notbremsung überbrücken und bis zur ersten Hektometertafel ohne orangefarbene waagrechte Streifen weiterfahren. Dort muss er den Zug so anhalten, dass der angehaltene Zug den Notbremsüberbrückungsabschnitt verlassen hat.

Es gibt Bremssysteme, beispielsweise nach UIC 541-5, die die Notbremsung unmittelbar auf das Betätigen der Notbremsbetätigungseinrichtung einleiten, so dass der Triebfahrzeugführer die bereits eingeleitete Notbremsung überbrücken, also wieder aufheben, muss. In anderen Systemen, beispielsweise nach NBÜ 2004 oder UIC 541-6, führt die Betätigung der Notbremsbetätigungseinrichtung zunächst nur zu einer optischen und akustischen Meldung im Führerstand. Der Triebfahrzeugführer muss diese Meldung entweder durch einen Überbrückungsbefehl oder durch eine Schnellbremsung bestätigen. Andernfalls wird die Notbremsung nach kurzer Zeit selbsttätig wirksam.

Dokument EP 1 674 358 A1 offenbart ein Verfahren zur Steuerung einer Notbremsüberbrückungseinrichtung. Dabei wird auf Strecken, auf denen eine Notbremsüberbrückung vorgeschrieben ist, die Funktion Notbremsüberbrückung eingeschaltet und auf Strecken, auf denen diese Funktion nicht erforderlich ist, ausgeschaltet. Bei der ausgeschalteten Funktion löst eine Betätigung einer Fahrgastnotbremse unabhängig vom Handeln des Fahrzeugführers eine sofortige Notbremsung des Zuges aus. Ferner wird entsprechend einer technischen Ausführung einer Notbremsüberbrückungseinrichtung auf bekannte Verfahren zur Steuerung der Notbremsüberbrückung umgeschaltet.

Es besteht aber das Problem, dass der Triebfahrzeugführer nicht zwingend über detaillierte Streckenkenntnisse verfügt und, insbesondere bei Strecken ohne entsprechende Streckenabschnittsmarkierungen, keine Information hat, ob der momentane Streckenabschnitt für eine Notbremsung günstig ist.

Der Erfindung liegt also die Aufgabe zugrunde, einen Triebfahrzeugführer in einer Notbremssituation hinsichtlich einer Notbremsüberbrückung zu unterstützen.

Die Aufgabe wird durch ein Notbremsüberbrückungssystem gemäß Anspruch 1, ein Bremssystem gemäß Anspruch 5 und Verfahren gemäß Anspruch 8 und 9 gelöst. Vorteilhafte Weiterentwicklungen sind den abhängigen Ansprüchen enthalten.

Gemäß einem Aspekt der Erfindung weist ein Notbremsüberbrückungssystem für ein Bremssystem für ein Schienenfahrzeug einen Informationseingang, eine Signaleinheit zum Signalisieren einer Notbremsempfehlung, eine Betätigungseinrichtung zum manuellen Bestätigen des Signalisierens der Notbremsempfehlung und einen Informationsausgang für ein Notbremssignal auf, und durch eine Ausbildung des Notbremsüberbrückungssystems so, dass die Notbremsempfehlung basierend auf einer an dem Informationseingang eingegebenen auf einer Streckeninformation beruhenden Information über die Signaleinheit signalisiert wird, und das Notbremssignal in Abhängigkeit von einer spezifischen manuellen Betätigung der Betätigungseinrichtung zur Bestätigung des Signalisierens der Notbremsempfehlung ausgegeben wird, kann ein Triebfahrzeugführer mittels der Notbremsempfehlung einfach über eine Eignung eines Streckenabschnitts für eine Notbremsung informiert werden und die Notbremsung basierend auf der Notbremsempfehlung und gegebenenfalls auf entsprechenden momentanen Bedingungen einleiten. Als die Eignung für die Notbremsung, also als Notbremsempfehlung, kann beispielsweise angezeigt werden, dass die Strecke momentan für eine Notbremsung geeignet, bedingt geeignet oder nicht geeignet ist.

Wenn die Signaleinheit vorteilhafterweise einen empfohlenen Zeitpunkt für eine Notbremsung anzeigt, kann der Triebfahrzeugführer die Notbremsung zu einem günstigen Zeitpunkt ohne Verzögerung einleiten.

Wenn das Notbremssystem vorteilhafterweise ein Akzeptieren einer Notbremsempfehlung und ein Nicht-Akzeptieren der Notbremsempfehlung an der Betätigungseinrichtung unterscheidet, kann der Triebfahrzeugführer mittels der Betätigungseinrichtung einfach eingeben, ob er die Notbremsempfehlung annimmt, oder einen Zeitpunkt für eine Einleitung der Notbremsung selbst bestimmen möchte. Ferner existiert eine Sicherheitsfunktion, die durch ein Nicht-Bestätigen der Betätigungseirichtung die Notbremsung entsprechend der Notbremsempfehlung einleitet, falls der Triebfahrzeugführer beispielsweise nicht in der Lage ist, die Notbremsempfehlung zu bestätigen.

Bei einer vorteilhaften Ausbildung des Notbremsüberbrückungssystems, die Streckeninformation über den Informationseingang zu empfangen und die Notbremsempfehlung aus der Streckeninformation zu bestimmen, ist kein weiteres System erforderlich, und das Notbremsüberbrückungssystem kann die Notbremsempfehlung direkt aus der Streckeninformation bestimmen und signalisieren.

In dem Fall, in dem das Bremssystem für das Schienenfahrzeug das Notbremsüberbrückungssystem aufweist, ist keine Datenübertragung zu einem anderen System außerhalb des Bremssystems erforderlich.

Wenn das Bremssystem vorteilhafterweise mit einem weiteren System verbunden ist, das ausgebildet ist, die Notbremsempfehlung aus der Streckeninformation zu bestimmen und die Notbremsempfehlung als die auf der Streckeninformation beruhende Information in das Notbremsüberbrückungssystem einzugeben, kann beispielsweise ein bereits vorhandenes weiteres System, wie etwa ein Fahrerassistenzsystem, verwendet werden, um die Notbremsempfehlung aus den Streckeninformationen zu bestimmen. Die Notbremsempfehlung wird dann in das Notbremsüberbrückungssystem eingegeben, dort signalisiert und kann durch den Triebfahrzeugführer bestätigt werden.

Bei einer vorteilhaften Weiterbildung des Bremssystems so, dass das weitere System ausgebildet ist, im Falle des Nicht-Bestätigens der Betätigungseinrichtung, ein Notbremsungseinleitungssignal an das Notbremsüberbrückungssystem zu übermitteln, und das Notbremsüberbrückungssystem ausgebildet ist, das Notbremsungseinleitungssignal als Notbremssignal auszugeben, kann das weitere System für die Bestimmung der Notbremsempfehlung genutzt werden, ohne das Notbremsüberbrückungssystem mit einem entsprechendem Mehraufwand zu erweitern.

In einem vorteilhaften Verfahren zur Notbremsüberbrückung in dem Bremssystem des Schienenfahrzeugs, in dem gemäß einem weiteren Aspekt der Erfindung die auf der Streckeninformation beruhende Information in das Notbremsüberbrückungssystem eingegeben wird, das Signal von der Notbremsbetätigungseinrichtung bei dem Betätigen einer Notbremsbetätigungseinrichtung durch das Notbremsüberbrückungssystem empfangen wird, die Notbremsempfehlung basierend auf der auf der Streckeninformation beruhenden eingegebenen Information durch die Signaleinheit signalisiert wird, die Notbremsempfehlung an der Betätigungseinrichtung in einer spezifischen Weise manuell bestätigt wird und das Notbremssignals in Abhängigkeit von dem manuellen spezifischen Bestätigen der Notbremsempfehlung ausgegeben wird, kann der Triebfahrzeugführer mittels der Notbremsempfehlung über spezifische Eigenschaften einer Strecke bezüglich der Eignung eines Streckenabschnitts für die Notbremsung informiert werden und die Notbremsung basierend auf der Notbremsempfehlung und gegebenenfalls entsprechenden momentanen Bedingungen einleiten.

In einem anderen vorteilhaften Verfahren, in dem gemäß einem anderen weiteren Aspekt der Erfindung die auf der Streckeninformation beruhenden Information dem weiteren System bereitgestellt wird, das Signal bei dem Betätigen der Notbremsbetätigungseinrichtung durch das weitere System von der Notbremsbetätigungseinrichtung empfangen wird, die auf der auf der eingegebenen Streckeninformation beruhenden Information basierende Notbremsempfehlung durch das weitere System in das Notbremsüberbrückungssystem eingegeben wird, die Notbremsempfehlung basierend auf der eingegebenen Information durch die Signaleinheit signalisiert wird, die Notbremsempfehlung an der Betätigungseinrichtung in der spezifischen Weise manuell bestätigt wird und das Notbremssignal in Abhängigkeit von dem manuellen spezifischen Bestätigen der Notbremsempfehlung ausgegeben wird, kann der Triebfahrzeugführer mittels der Notbremsempfehlung einfach über spezifische Eigenschaften der Strecke informiert werden und die Notbremsung basierend auf der Notbremsempfehlung und gegebenenfalls entsprechenden momentanen Bedingungen einleiten, wobei ein vorhandenes weiteres System genutzt wird, ohne das Notbremsüberbrückungssystem aufwändig entsprechend ausstatten zu müssen.

Wenn die Verfahren vorteilhafterweise das Akzeptieren der Notbremsempfehlung, so dass eine Notbremsung zu einem empfohlenen Zeitpunkt eingeleitet wird, das Nicht-Akzeptieren der Notbremsempfehlung, so dass die Notbremsung zu einem von einem Triebfahrzeugführer festgelegten Zeitpunkt eingeleitet wird, und das Ausgeben eines Notbremssignals in Abhängigkeit von dem manuellen spezifischen Bestätigen der Notbremsempfehlung als das spezifische Bestätigen der Notbremsempfehlung enthalten, kann der Triebfahrzeugführer mittels der Betätigungseinrichtung einfach eingeben, ob er die Notbremsempfehlung annimmt, oder einen Zeitpunkt für eine Einleitung der Notbremsung selbst bestimmen möchte. Ferner ist eine Sicherheitsfunktion vorhanden, die die Notbremsung entsprechend der Notbremsempfehlung einleitet, falls der Triebfahrzeugführer beispielsweise nicht in der Lage ist, die Notbremsempfehlung zu bestätigen

Wenn das weitere System im Falle des Nicht-Bestätigens der Notbremsempfehlung vorteilhafterweise ein Notbremseinleitungssignal zur Einleitung einer Notbremsung an das Notbremsüberbrückungssystem übermittelt, kann das Erzeugen des Signals in dem weiteren System erfolgen, und es ist nicht erforderlich, das Notbremsüberbrückungssystem so auszurüsten, dass das Signal zur Einleitung der Notbremsung darin erzeugt wird.

In dem Fall, in dem die Streckeninformation vorteilhafterweise für eine Notbremsung ungünstige Streckenabschnitte enthält, können die ungünstigen Streckenabschnitte überfahren werden und die Notbremsung kann so ausgeführt werden, dass der Zug aufgrund der Notbremsung in einem beispielsweise für Hilfskräfte günstigen Streckenabschnitt anhält.

Wenn das Notbremsüberbrückungssystem oder das weitere System vorteilhafterweise erkennt, ob sich das Schienenfahrzeug in einem der ungünstigen Streckenabschnitte befindet, kann die Empfehlung, dass die Notbremsung momentan nicht ausgeführt werden soll, unmittelbar angezeigt werden.

Wenn das Notbremsüberbrückungssystem oder das weitere System die Notbremsempfehlung so bestimmt, dass das Schienenfahrzeug nicht in einem der für die Notbremsung ungünstigen Streckenabschnitte zum Stehen kommt, kann der angehaltene Zug, beispielsweise für Hilfskräfte, leicht zugänglich sein.

Die Erfindung wird nun mittels einer Ausführungsform unter Bezugnahme auf die beigefügte Zeichnung erläutert.

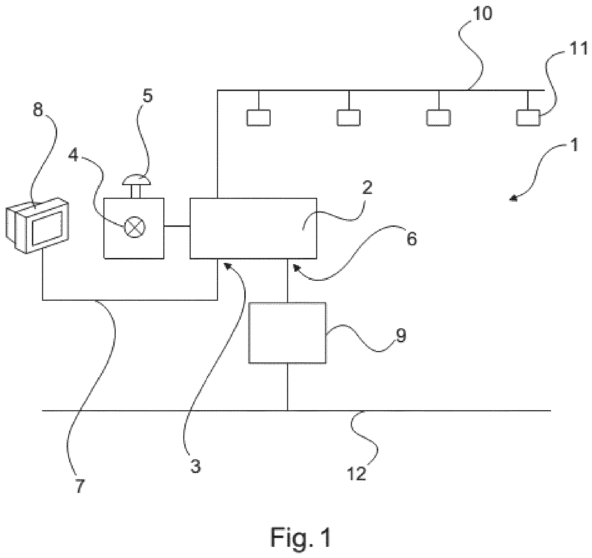

Insbesondere zeigt Fig. 1 eine schematische Darstellung eines Abschnitts eines Bremssystems 1 für ein Schienenfahrzeug.

**Fig. 1** zeigt eine schematische Darstellung eines Abschnitts eines Bremssystems 1 für ein Schienenfahrzeug. Der Abschnitt des Bremssystems 1 ist ein für eine Notbremsung bzw. Notbremsüberbrückung relevanter Abschnitt des Bremssystems 1.

Das Bremssystem 1 weist ein Notbremsüberbrückungssystem 2 auf. Das Notbremsüberbrückungssystem 2 ist mit einem Informationseingang 3 zum Eingeben von auf Streckeninformationen basierenden Informationen, einer Signaleinheit 4 zum Signalisieren einer Notbremsempfehlung und einer Betätigungseinrichtung 5 zum manuellen Bestätigen des Signalisierens der Notbremsempfehlung versehen. Ferner weist das Notbremsüberbrückungssystem 2 einen Informationsausgang 6 für ein Notbremssignal auf.

Die Signaleinheit 4 und die Betätigungseinrichtung 5 sind räumlich getrennt von einem Steuergerät des Notbremsüberbrückungssystems 2 in einem Führerraum angeordnet. Alternativ können sie auch in dem Steuergerät des Notbremsüberbrückungssystems 2 angeordnet sein.

Das Notbremsüberbrückungssystem 2 ist über eine Kommunikationsleitung 7 mit anderen Systemen des Schienenfahrzeugs verbunden. Optional kann das Notbremsüberbrückungssystem 2 mit einem Fahrerassistenzsystem als ein weiteres System 8, verbunden sein.

Die Kommunikationsleitung 7 ist als eine Leitung eines Bussystems für eine Datenübertragung von Informationen ausgeführt. Alternativ kann die Kommunikationsleitung 7 auch beispielsweise als konventionelle Datenleitungen oder als eine Funkübertragungsstrecke ausgeführt sein.

Das Bremssystem 1 weist ferner ein Notbremsventil 9 auf, das mit dem Informationsausgang 6 für das Notbremssignal und einer Hauptluftleitung 12 verbunden ist.

Darüber hinaus ist das Notbremsüberbrückungssystem 2 mit einer Notbremsschleife 10 verbunden. Die Notbremsschleife 10 weist mehrere Notbremsbetätigungseinrichtungen 11 auf, die beispielsweise von Reisenden betätigt werden können.

Im Betrieb signalisiert das Notbremsüberbrückungssystem 2 eine auf einer Streckeninformation beruhende Information, die an dem Informationseingang 3 eingegeben wird.

Die auf der Streckeninformation beruhende Information ist die Information, ob ein momentaner Streckenabschnitt für eine Notbremsung geeignet, bedingt geeignet, oder nicht geeignet ist, also ob der Streckenabschnitt für eine Notbremsung günstig oder ungünstig ist. Das Notbremsüberbrückungssystem 2 erkennt daraus, ob sich das Schienenfahrzeug in einem günstigen oder ungünstigen Streckenabschnitt befindet und bestimmt dann die Notbremsempfehlung aus der Streckeninformation. Die Notbremsempfehlung wird so bestimmt, dass das Schienenfahrzeug nicht in einem der für die Notbremsung ungünstigen Streckenabschnitte zum Stehen kommt.

Alternativ kann die auf der Streckeninformation beruhende Information auch eine Notbremsempfehlung sein, die in dem weiteren System, beispielsweise dem Fahrerassistenzsystem, erzeugt wird. Das weitere System erzeugt die Notbremsempfehlung, also ob der momentane Streckenabschnitt für eine Notbremsung geeignet, bedingt geeignet, oder nicht geeignet ist, basierend auf der Streckeninformation, die in das weitere System eingegeben wird. Die Notbremsempfehlung wird auch in diesem Fall so bestimmt, dass das Schienenfahrzeug nicht in einem der für die Notbremsung ungünstigen Streckenabschnitte zum Stehen kommt.

Wenn die Notbremsbetätigungseinrichtung 11 betätigt wird, gibt sie ein entsprechendes Signal aus, das durch das Notbremsüberbrückungssystem 2, oder alternativ durch das weitere System, empfangen wird.

Die Signaleinheit 4 signalisiert dann die in dem Notbremsüberbrückungssystem 2 bestimmte, oder alternativ die in dem weiteren System bestimmte und durch das Notbremsüberbrückungssystem 2 empfangene, Notbremsempfehlung.

Das Notbremsüberbrückungssystem 2 zeigt einen empfohlenen Zeitpunkt für eine Notbremsung an der Signaleinheit 4 an. Alternativ ist die Anzeige des empfohlenen Zeitpunkts nicht vorgesehen.

Die Notbremsempfehlung wird, beispielsweise durch den Triebfahrzeugführer, in einer spezifischen Weise manuell bestätigt. Das Notbremsüberbrückungssystem 2 unterscheidet ein Akzeptieren einer Notbremsempfehlung, so dass eine Notbremsung zu einem empfohlenen Zeitpunkt eingeleitet wird, ein Nicht-Akzeptieren der Notbremsempfehlung, so dass die Notbremsung zu einem von einem Triebfahrzeugführer festgelegten Zeitpunkt eingeleitet wird, und ein Nicht-Bestätigen an der Betätigungseinrichtung 5, so dass die Notbremsung zu dem empfohlenen Zeitpunkt eingeleitet wird. Die Betätigungseinrichtung 5 kann dazu ein nicht gezeigtes Betätigungselement oder mehrere aufweisen.

In Abhängigkeit von dem manuellen spezifischen Bestätigen bzw. Nicht-Bestätigen der Notbremsempfehlung gibt das Notbremsüberbrückungssystem 2 das Notbremssignal an das Notbremsventil 9 aus.

In dem Fall, in dem die Notbremsempfehlung alternativ durch das weitere System erzeugt wird, erzeugt das weitere System auch ein Notbremseinleitungssignal, das in das Notbremsüberbrückungssystem 2 eingegeben wird. Das Notbremseinleitungssignal wird dann von dem Notbremsüberbrückungssystem 2 als das Notbremssignal ausgegeben. Alternativ wird das Notbremseinleitungssignal als Notbremssignal direkt an das Notbremsventil 9 übermittelt.

Alle in der Beschreibung, den nachfolgenden Ansprüchen und der Zeichnung dargestellten Merkmale können sowohl einzeln als auch in beliebiger Kombination miteinander erfindungswesentlich sein.

### BEZUGSZEICHENLISTE

- 1: Bremssystem
- 2: Notbremsüberbrückungssystem
- 3: Informationseingang
- 4: Signaleinheit
- 5: Betätigungseinrichtung
- 6: Informationsausgang
- 7: Kommunikationsleitung
- 8: weiteres System
- 9: Notbremsventil
- 10: Notbremsschleife
- 11: Notbremsbetätigungseinrichtung
- 12: Hauptluftleitung

## Patentansprüche

1. Notbremsüberbrückungssystem (2) für ein Bremssystem (1) für ein Schienenfahrzeug, aufweisend
einen Informationseingang (3),
eine Signaleinheit (4) zum Signalisieren einer Notbremsempfehlung,
eine Betätigungseinrichtung (5) zum manuellen Bestätigen des Signalisierens der Notbremsempfehlung, und
einen Informationsausgang (6) für ein Notbremssignal,
wobei das Notbremsüberbrückungssystem (2) ausgebildet ist,
die Notbremsempfehlung basierend auf einer an dem Informationseingang (3) eingegebenen auf einer Streckeninformation beruhenden Information über die Signaleinheit (4) zu signalisieren, und
das Notbremssignal in Abhängigkeit von einer spezifischen manuellen Betätigung der Betätigungseinrichtung (5) auszugeben.

2. Notbremsüberbrückungssystem (2) gemäß Anspruch 1, wobei
das Notbremsüberbrückungssystem (2) ausgebildet ist, einen empfohlenen Zeitpunkt für eine Notbremsung an der Signaleinheit (4) anzuzeigen.

3. Notbremsüberbrückungssystem (2) gemäß Anspruch 1 oder 2, wobei
das Notbremsüberbrückungssystem (2) ausgebildet ist, ein Akzeptieren einer Notbremsempfehlung und ein Nicht-Akzeptieren der Notbremsempfehlung zu unterscheiden, und wobei eine Sicherheitsfunktion existiert, die dazu ausgebildet ist, bei einem Nicht-Bestätigen der Notbremsempfehlung an der Betätigungseinrichtung (5) eine Notbremsung entsprechend der Notbremsempfehlung einzuleiten.

4. Notbremsüberbrückungssystem (2) gemäß einem der Ansprüche 1 bis 3, wobei
das Notbremsüberbrückungssystem (2) ausgebildet ist, die Streckeninformation über den Informationseingang (3) zu empfangen, und die Notbremsempfehlung aus der Streckeninformation zu bestimmen.

5. Bremssystem (1) für ein Schienenfahrzeug, das ein Notbremsüberbrückungssystem (2) gemäß einem der Ansprüche 1 bis 4 aufweist.

6. Bremssystem (1) gemäß Anspruch 5, wobei
das Bremssystem (1) mit einem weiteren System (8) verbunden ist, und
das weitere System (8) ausgebildet ist, die Notbremsempfehlung aus der Streckeninformation zu bestimmen und die Notbremsempfehlung als die auf der Streckeninformation beruhende Information in das Notbremsüberbrückungssystem (2) einzugeben.

7. Bremssystem (1) gemäß Anspruch 3 und 6, wobei
das weitere System (8) ausgebildet ist, im Falle des Nicht-Bestätigens der Notbremsempfehlung an der Betätigungseinrichtung, ein Notbremsungseinleitungssignal an das Notbremsüberbrückungssystem (2) zu übermitteln, und
das Notbremsüberbrückungssystem (2) ausgebildet ist, das Notbremsungseinleitungssignal als das Notbremssignal auszugeben.

8. Verfahren zur Notbremsüberbrückung in einem Bremssystem (1) eines Schienenfahrzeugs mit den Schritten:
- Eingeben einer auf einer Streckeninformation beruhenden Information in ein Notbremsüberbrückungssystem (2) gemäß einem der Ansprüche 1 bis 4
- Empfangen eines Signals durch das Notbremsüberbrückungssystem (2) von einer Notbremsbetätigungseinrichtung (11) bei einem Betätigen der Notbremsbetätigungseinrichtung (11);
- Signalisieren einer Notbremsempfehlung basierend auf der auf der Streckeninformation beruhenden eingegebenen Information durch die Signaleinheit (4);
- manuelles spezifisches Bestätigen der Notbremsempfehlung an der Betätigungseinrichtung (5);
- Ausgeben eines Notbremssignals in Abhängigkeit von dem manuellen spezifischen Bestätigen der Notbremsempfehlung.

9. Verfahren zur Notbremsüberbrückung in einem Bremssystem (1) für ein Schienenfahrzeug gemäß Anspruch 6 oder 7, mit den Schritten:
- Bereitstellen einer auf einer Streckeninformation beruhenden Information in das weitere System (8);
- Empfangen eines Signals durch das weitere System (8) von einer Notbremsbetätigungseinrichtung (11) bei einem Betätigen der Notbremsbetätigungseinrichtung (11);
- Eingeben einer Notbremsempfehlung basierend auf der auf der eingegebenen Streckeninformation beruhenden Information in das Notbremsüberbrückungssystem (2) durch das weitere System (8);
- Signalisieren der Notbremsempfehlung basierend auf der eingegebenen Information durch die Signaleinheit (4);
- manuelles spezifisches Bestätigen der Notbremsempfehlung an der Betätigungseinrichtung (5);
- Ausgeben eines Notbremssignals in Abhängigkeit von dem manuellen spezifischen Bestätigen der Notbremsempfehlung.

10. Verfahren gemäß Anspruch 8 oder 9, wobei
das spezifische Bestätigen der Notbremsempfehlung
ein Akzeptieren der Notbremsempfehlung, so dass eine Notbremsung zu einem empfohlenen Zeitpunkt eingeleitet wird, und
ein Nicht-Akzeptieren der Notbremsempfehlung, so dass die Notbremsung zu einem von einem Triebfahrzeugführer festgelegten Zeitpunkt eingeleitet wird, enthält, und
wobei ein Nicht-Bestätigen der Notbremsempfehlung zur Einleitung der Notbremsung zu dem empfohlenen Zeitpunkt führt,

11. Verfahren gemäß Anspruch 9 und 10, wobei
das weitere System (8) im Falle des Nicht-Bestätigens der Notbremsempfehlung an der Betätigungseinrichtung ein Notbremseinleitungssignal zur Einleitung einer Notbremsung an das Notbremsüberbrückungssystem (2) übermittelt.

12. Verfahren gemäß einem der Ansprüche 8 bis 11, wobei
die Streckeninformation für die Notbremsung ungünstige Streckenabschnitte enthält.

13. Verfahren gemäß Anspruch 12, wobei
das Notbremsüberbrückungssystem (2) oder das weitere System (8) erkennt, ob sich das Schienenfahrzeug in einem der ungünstigen Streckenabschnitte befindet.

14. Verfahren gemäß Anspruch 12 oder 13, wobei
das Notbremsüberbrückungssystem (2) oder das weitere System (8) die Notbremsempfehlung so bestimmt, dass das Schienenfahrzeug nicht in einem der für die Notbremsung ungünstigen Streckenabschnitte zum Stehen kommt.

## Claims

1. An emergency brake override system (2) for a brake system (1) for a rail vehicle, comprising:
a data input port (3);
a signal unit (4) for signalling an emergency braking recommendation;
an actuating device (5) for manual confirmation of the signalling of the emergency braking recommendation; and
a data output port (6) for an emergency braking signal;
the emergency brake override system (2) being designed:
to signal the emergency braking recommendation via the signal unit (4) on the basis of information based on route data input at the data input port (3); and
to output the emergency braking signal dependent on a specific manual actuation of the actuating device (4).

2. An emergency brake override system (2) according to claim 1,
the emergency brake override system (2) being designed to display a recommended time point for emergency braking at the signal unit (4).

3. An emergency brake override system (2) according to claim 1 or 2,
the emergency brake override system (2) being designed to distinguish between acceptance of an emergency braking recommendation and non-acceptance of an emergency braking recommendation, and there existing a safety function that is designed to initiate emergency braking in accordance with the emergency braking recommendation if the emergency braking recommendation is not confirmed at the actuating device (5).

4. An emergency brake override system (2) according to any one of claims 1 to 3,
the emergency brake override system (2) being designed to receive the route data via the data input port (3) and to determine the emergency braking recommendation from the route data.

5. A brake system (1) for a rail vehicle, that has an emergency brake override system (2) a rotary switch (110) according to any one of claims 1 to 4.

6. A brake system (1) according to claim 5,
the brake system (1) being connected to a further system (8), and
this further system (8) being designed to determine the emergency braking recommendation from the route information and to input the emergency braking recommendation in the form of the information based on the route data into the emergency brake override system (2).

7. A brake system (1) according to claims 3 and 6,
the further system (8) being designed to transmit an emergency braking initiation signal (11) to the emergency brake override system (2) if the emergency braking recommendation is not confirmed at the actuating device, and
the emergency brake override system (2) being designed to output the emergency braking initiation signal (11) as the emergency braking signal.

8. A method for emergency brake overriding in a brake system (1) of a rail vehicle comprising the following steps:
- the inputting of information based on route data into an emergency brake override system (2) according to any one of claims 1 to 4;
- the reception by the emergency brake override system (2) of a signal from an emergency brake actuating device (11) on actuation of the emergency brake actuating device (11);
- the signalling of an emergency braking recommendation based on the information input by the signal unit (4) based on the route data;
- the specific manual confirmation of the emergency braking recommendation at the actuating device (5);
- the outputting of an emergency braking signal dependent on the specific manual confirmation of the emergency braking recommendation.

9. A method for emergency brake overriding in a brake in a brake system (1) for a rail vehicle according to claim 6 or 7, comprising the following steps:
- the provision of information based on track data to the further system (8);
- the reception of a signal from an emergency brake actuating device (11) by the further system (8) on actuation of the emergency brake actuating device (11);
- the inputting of an emergency braking recommendation by the further system (8) into the emergency brake override system (2) on the basis of the information based on the track data input;
- the signalling of the emergency braking recommendation on the basis of the information input by the signal unit (4);
- the specific manual confirmation of the emergency braking recommendation at the actuating device (5);
- the outputting of an emergency braking signal dependent on the specific manual confirmation of the emergency braking recommendation.

10. A method according to claim 8 or 9,
the specific confirmation of the emergency braking recommendation entails:
acceptance of the emergency braking recommendation such that emergency braking is initiated at a recommended point in time, and
non-acceptance of the emergency braking recommendation such that emergency braking is initiated at a point in time determined by a train driver, and
non-confirmation of the emergency braking recommendation resulting in the initiation of emergency braking at the recommended point in time.

11. A method according to claim 9 or 10,
in the event of non-confirmation of the emergency braking recommendation at the actuating device the further system (8) transmits an emergency braking initiation signal to the emergency brake override system (2) in order to initiate emergency braking.

12. A method according to any one of claims 8 to 11,
the route data containing route portions unfavourable for emergency braking.

13. A method according to claim 12,
the emergency brake override system (2) or the further system (8) identifying whether the rail vehicle is located on a route portion unfavourable for emergency braking.

14. A method according to claim 12 or 13,
the emergency brake override system (2) or the further system (8) determining the emergency braking recommendation in such a way that the rail vehicle does not come to a stop on a route portion unfavourable for emergency braking.

## Revendications

1. Système (2) de désactivation d'un frein d'urgence d'un système (1) de freinage d'un véhicule ferroviaire, comportant
une entrée (3) d'information,
une unité (4) de signal pour signaler une recommandation de freinage d'urgence,
un dispositif (5) d'actionnement pour la confirmation manuelle de la signalisation de la recommandation de freinage d'urgence, et
une sortie (6) d'information pour un signal de freinage d'urgence,
dans lequel le système (2) de désactivation d'un frein d'urgence est constitué
pour signaler, par l'unité (4) de signal, la recommandation de freinage d'urgence basée sur une information entrée à l'entrée (3) d'information et reposant sur une information de voie, et
pour émettre le signal de freinage d'urgence en fonction d'un actionnement manuel spécifique du dispositif (5) d'actionnement.

2. Système (2) de désactivation d'un frein d'urgence suivant la revendication 1,
dans lequel le système (2) de désactivation d'un frein d'urgence est constitué pour indiquer à l'unité (4) de signal un instant recommandé d'un freinage d'urgence.

3. Système (2) de désactivation d'un frein d'urgence suivant la revendication 1 ou 2,
dans lequel le système (2) de désactivation d'un frein d'urgence est constitué pour distinguer entre une acceptation d'une recommandation de freinage d'urgence et une non acceptation de la recommandation du freinage d'urgence, et dans lequel il existe une fonction de sécurité, qui est constituée pour lancer, lorsque la recommandation du freinage d'urgence n'est pas confirmée, sur le dispositif (5) d'actionnement, un freinage d'urgence correspondant à la recommandation de freinage d'urgence.

4. Système (2) de désactivation d'un frein d'urgence suivant l'une des revendications 1 à 3,
dans lequel le système (2) de désactivation d'un frein d'urgence est constitué pour recevoir l'information de voie par l'entrée (3) d'information et pour déterminer la recommandation de freinage d'urgence, à partir de l'information de voie.

5. Système (1) de freinage d'un véhicule ferroviaire, qui a un système (2) de désactivation d'un frein d'urgence suivant l'une des revendications 1 à 4.

6. Système (1) de freinage suivant la revendication 5, dans lequel
le système (1) de freinage est relié à un autre système (8), et
l'autre système (8) est constitué pour déterminer la recommandation de freinage d'urgence à partir de l'information de voie et pour entrer l'information de freinage d'urgence dans le système (2) de désactivation d'un frein d'urgence comme information reposant sur l'information de voie.

7. Système (1) de freinage suivant la revendication 3 et 6, dans lequel
l'autre système (8) est constitué pour transmettre, dans le cas de la non confirmation de la recommandation de freinage d'urgence au dispositif d'actionnement, un signal de lancement d'un frein d'urgence au système (2) de désactivation d'un frein d'urgence, et
le système (2) de désactivation du frein d'urgence est constitué pour envoyer le signal de lancement du freinage d'urgence comme signal de freinage d'urgence.

8. Procédé de désactivation d'un frein d'urgence dans un système (1) de freinage d'un véhicule ferroviaire, comprenant les stades
- entrée d'une information reposant sur une information de voie dans un système (2) de désactivation d'un frein d'urgence suivant l'une des revendications 1 à 4,
- réception d'un signal, par le système (2) de désactivation du frein d'urgence, d'un dispositif (11) d'actionnement du frein d'urgence, lors d'un actionnement du dispositif (11) d'actionnement du frein d'urgence ;
- signalisation, par l'unité (4) de signal, d'une recommandation de freinage d'urgence, reposant sur l'information entrée reposant sur l'information de voie;
- confirmation spécifique manuelle de la recommandation de freinage d'urgence au dispositif (5) d'actionnement ;
- envoi d'un signal de freinage d'urgence en fonction de la confirmation spécifique manuelle de la recommandation de freinage d'urgence.

9. Procédé de désactivation d'un frein d'urgence dans un système (1) de freinage d'un véhicule ferroviaire suivant la revendication 6 ou 7, comprenant les stades
- mise à disposition d'une information, reposant sur une information de voie, dans l'autre système (8) ;
- réception d'un signal, par l'autre système (8), d'un dispositif (11) d'actionnement du frein d'urgence, lors d'un actionnement du dispositif (11) d'actionnement du frein d'urgence ;
- entrée d'une recommandation de freinage d'urgence, sur la base de l'information reposant sur l'information de voie entrée, dans le système (2) de désactivation d'un frein d'urgence par l'autre système (8) ;
- signalisation de la recommandation de freinage d'urgence sur la base de l'information entrée par l'unité (4) de signal ;
- confirmation spécifique manuelle de la recommandation du freinage d'urgence au dispositif (5) d'actionnement ;
- envoi d'un signal de freinage d'urgence en fonction de la confirmation spécifique manuelle de la recommandation de freinage d'urgence.

10. Procédé suivant la revendication 8 ou 9, dans lequel
la confirmation spécifique de la recommandation du freinage d'urgence comporte
une acceptation de la recommandation du freinage d'urgence, de manière à lancer un freinage d'urgence à un instant recommandé, et
une non acceptation de la recommandation du freinage d'urgence, de manière à ce que le freinage d'urgence soit lancé par un conducteur d'une motrice, et
dans laquelle une non confirmation de la recommandation du freinage d'urgence provoque le lancement du freinage d'urgence à l'instant recommandé.

11. Procédé suivant la revendication 9 et 10, dans lequel
l'autre système (8) transmet au système (2) de désactivation du frein d'urgence, dans le cas de la non confirmation de la recommandation du freinage d'urgence au dispositif d'actionnement, un signal de lancement d'un freinage d'urgence pour le lancement d'un freinage d'urgence.

12. Procédé suivant l'une des revendications 8 à 11, dans lequel
l'information de voie contient des sections de voie défavorables au freinage d'urgence.

13. Procédé suivant la revendication 12, dans lequel
le système (2) de désactivation du frein d'urgence ou l'autre système (8) détecte si le véhicule ferroviaire se trouve dans l'un des tronçons de voie défavorables.

14. Procédé suivant la revendication 12 ou 13, dans lequel
le système (2) de désactivation du frein d'urgence ou l'autre système (8) détermine la recommandation de freinage d'urgence, de manière à ce que le véhicule ne s'arrête pas dans l'un des tronçons de voie défavorables au freinage d'urgence.
